# EUROPÄISCHE PATENTSCHRIFT

(11) **EP 2 595 341 B1**
(45) Veröffentlichungstag und Bekanntmachung des Hinweises auf die Patenterteilung: **06.08.2014**
(21) Anmeldenummer: 12190180.5
(22) Anmeldetag: 26.10.2012
(51) Int. Cl.: H04L 9/32, G07C 9/00

(54) **Benutzerrechteverwaltung und Zugangskontrollsystem mit Zeitbeschränkung**
User rights management and access control system with time limitation
Gestion des droits d'utilisateurs et système de contrôle d'accès avec restriction de durée

(30) Priorität: 17.11.2011 CH 18402011
(43) Veröffentlichungstag der Anmeldung: 22.05.2013
(73) Patentinhaber: Sauter, Sven, 9495 Triesen (LI)
(72) Erfinder: Sauter, Sven, 9495 Triesen (LI)
(74) Vertreter: Hasler, Erich

(56) Entgegenhaltungen:
- EP-A1- 1 650 716
- WO-A1-02/18733

## Beschreibung

### Technisches Gebiet

Die Erfindung betrifft ein Verfahren zur Verwaltung von Benutzerrechten für ein Objekt (z.B. ein Gebäude) und ein Zugangskontrollsystem, welches dieses Verfahren nutzt.

### Stand der Technik

Elektronische Zugangskontrollsysteme für Gebäude weisen im Allgemeinen eine Kontrolleinrichtung auf, die den Zugang zum Gebäude z.B. über die Betätigung einer Schliessanlage kontrolliert. Zudem sind sie mit einer Schnittstelle ausgestattet, über die sich Benutzer, die Zugang begehren, bei der Kontrolleinrichtung authentifizieren müssen. Dies kann beispielsweise ein Tastenfeld zur Eingabe eines Zahlencodes sein, wobei ein berechtigter Benutzer den Code im Vorfeld von einer Benutzerrechteverwaltung erhält, welche ebenfalls einen Teil des Zugangskontrollsystems darstellt. Bei der Authentifizierung muss eine bei der Kontrolleinrichtung hinterlegte Information mit der vom Benutzer eingegebenen Ziffernfolge verglichen werden. Ein sicherheitsrelevanter Aspekt solcher Systeme ist mit der Art und Weise verknüpft, wie diese Informationen gehandhabt bzw. verwaltet werden. Oftmals kommen ein oder mehrere generelle Systemcodes zum Einsatz, welche über lange Zeit unverändert beibehalten werden.

Dies stellt ein Sicherheitsrisiko dar, wenn sich die Zusammensetzung der Personengruppe, welche Zugang zum Gebäude haben sollte, ändert. Das trifft insbesondere auf diejenigen Fälle zu, bei denen Personen nur temporär, beispielsweise für ein paar Stunden Zugang zum Objekt gewährt werden soll.

Es bestünde natürlich die Möglichkeit, die bei der Kontrolleinrichtung hinterlegten Informationen durch einen Zugriff von ausserhalb des Gebäudes, z.B. über eine Datenverbindung, periodisch oder fallspezifisch zu ändern (vgl. beispielsweise WO 2001/126874 A2). Dies ist sicherheitstechnisch jedoch nicht unbedenklich, da durch die Datenverbindung eine weitere potentielle Schwachstelle und Angriffspunkt im System geschaffen wird.

In der Vergangenheit wurde deshalb nach Wegen gesucht, diesen Problemen zu begegnen. Aus der EP 1650 716 A1 ist beispielsweise ein Verfahren zur Verwaltung von Benutzerrechten für ein codegesichertes Objekt bekannt, bei dem von einer Benutzerrechteverwaltung ein Code mit einer Objektkennung und einer Berechtigungszeit erzeugt wird. Anschliessend wird der Code dem Benutzer mitgeteilt, welcher ihn zur Authentifizierung über eine Schnittstelle an die Kontrolleinrichtung übergibt. Die Kontrolleinrichtung überprüft den übergebenen Code anhand der ihr vorgegebenen Objektkennung und einer von der Kontrolleinrichtung ermittelten (aktuellen) Zeit. Nur wenn die ermittelte Zeit mit der im Code integrierten Berechtigungszeit übereinstimmt, wird von der Kontrolleinrichtung der Zugang zum Objekt gewährt. Damit sie diesen Vergleich anstellen kann, muss die Kontrolleinrichtung den Code entschlüsseln, um die Objektkennung von der Berechtigungszeit zu trennen. Dieses Prinzip ist insofern verbesserungsfähig, als aus dem Code die Berechtigungszeit und die Objektkennung extrahierbar sind und der Entschlüsselungsalgorithmus in der Kontrolleinrichtung hinterlegt sein muss, was sicherheitstechnisch problematisch ist.

Aus den Offenlegungsschriften US 2003/0179075 A1 und WO 02/18733 A1 sind ähnliche Systeme bekannt, bei denen diese Schwachstelle dadurch behoben wird, dass die Kontrolleinrichtung den vom Benutzer übergebenen Code nicht entschlüsselt. Stattdessen wird aus der in der Kontrolleinrichtung hinterlegten Benutzer- oder Objektkennung und der aktuellen Uhrzeit ein Code berechnet, der mit dem übergebenen Code verglichen wird. Dies ermöglicht den Einsatz von Einwegfunktionen bei der Verschlüsselung, so dass vom Code keine Rückschlüsse auf die darin enthaltenen Informationen gezogen werden können. Da die Berechtigungszeit nicht aus dem Code extrahiert wird bzw. werden kann, müssen vom Zugangskontrollsystem aber immer mehrere Codes berechnet und mit dem vom Benutzer eingegebenen Code verglichen werden, wenn der Code z.B. nur für eine bestimmte Zeitspanne innerhalb eines Tages gültig sein soll.

### Aufgabe der Erfindung

Eine Aufgabe der vorliegenden Erfindung, besteht darin, ein Verfahren zur Verwaltung von Benutzerrechten sowie ein Zugangskontrollsystem bereitzustellen, welches sich dieses Verfahrens bedient. Das Verfahren soll die im Zusammenhang mit dem Stand der Technik erwähnten Nachteile oder zumindest einen Teil davon nicht aufweisen. Weitere Vorteile und Ziele der vorliegenden Erfindung ergeben sich aus der nachfolgenden Beschreibung.

### Darstellung der Erfindung

Die oben genannte Aufgabe wird erfindungsgemäss gelöst durch ein Verfahren nach Anspruch 1 sowie ein Zugangskontrollsystem nach Anspruch 10.

Insbesondere handelt es sich dabei um ein Verfahren zur Verwaltung von temporären Benutzerrechten für ein Objekt (z.B. ein Gebäude), bei dem:
- durch eine (vorzugsweise entfernt vom Objekt lokalisierte) Benutzerrechteverwaltung ein erstes Prüfmerkmal erzeugt wird, indem eine bei bzw. in der Benutzerrechteverwaltung hinterlegte Kennung und ein Gültigkeitszeitraum mittels eines ersten Algorithmus transformiert werden,
- das erste Prüfmerkmal von der Benutzerrechteverwaltung an einen Benutzer übermittelt wird,
- das erste Prüfmerkmal vom Benutzer an eine (vorzugsweise am Ort des Objekts lokalisierte) den Zugang zum Objekt kontrollierende Kontrolleinrichtung übermittelt wird,
- durch die Kontrolleinrichtung ein zweites Prüfmerkmal erzeugt wird, indem eine bei der Kontrolleinrichtung hinterlegte Kennung und ein aktueller Zeitraum, welcher durch ein der Kontrolleinrichtung zugeordnetes Zeitmessinstrument ermittelt wurde, mittels des ersten Algorithmus transformiert werden, und
- die Kontrolleinrichtung das erste Prüfmerkmal mit dem zweiten Prüfmerkmal vergleicht und abhängig vom Vergleichsergebnis den Zugang zum Objekt freigibt, wobei sich das Verfahren dadurch auszeichnet, dass
- durch die Benutzerrechteverwaltung ein Zugangscode erzeugt wird, indem dem ersten Prüfmerkmal eine Zeiteinschränkung hinzugefügt wird, - die Kontrolleinrichtung das erste Prüfmerkmal aus dem Zugangscode isoliert und es dann mit dem zweiten Prüfmerkmal vergleicht und vorzugsweise
- die Kontrolleinrichtung die Zeiteinschränkung aus dem Zugangscode isoliert und diese dann mit einer Zeitinformation, welche durch ein der Kontrolleinrichtung zugeordnetes Zeitmessinstrument ermittelt wurde, vergleicht und abhängig vom Vergleichsergebnis den Zugang zum Objekt freigibt.

Das erste Prüfmerkmal wird also (im Unterschied zum Stand der Technik) als Teil eines Zugangscodes von der Benutzerrechteverwaltung an den Benutzer und vom Benutzer an die Kontrolleinrichtung weitergegeben. Der Zugangscode enthält zusätzlich zum ersten Prüfmerkmal die oben bezeichnete Zeiteinschränkung.

Wenn von einem Gültigkeitszeitraum, einem (aktuellen) Zeitraum, einer Zeiteinschränkung oder einer (aktuellen) Zeitinformation die Rede ist, so sollen einerseits die durch die genannten Begriffe repräsentierten Zeitpunkte oder Zeitintervalle selbst und andererseits die diese Zeitpunkte oder Zeitintervalle repräsentierenden oder definierenden Informationen (z.B. Datumsformat) offenbart sein, soweit dies im jeweiligen Kontext sinnvoll erscheint. Die genannten Informationen liegen zweckmässigerweise in einer Form vor, die eine Verarbeitung durch die Benutzerrechteverwaltung bzw. die Kontrolleinrichtung erlaubt, z.B. in Form einer Zeichenfolge.

Anhand der folgenden Ausgestaltungsvariante wird die Vorteilhaftigkeit des oben beschriebenen Verfahrens deutlich:
Wenn der erste Algorithmus eine Einwegfunktion enthält, so kann der Gültigkeitszeitraum (z.B. ein bestimmter Tag, Woche, Jahr) nicht aus dem ersten Prüfmerkmal und damit auch nicht aus dem Zugangscode isoliert werden. Die Zeiteinschränkung (z.B. ein sich periodisch wiederholender Zeitpunkt oder Zeitintervall wie eine Tageszeit, Uhrzeit, Stunde etc.) kann hingegen durch die Kontrolleinrichtung aus dem Zugangscode isoliert werden. Somit ist einerseits ein Rückschluss vom Zugangscode auf den Gültigkeitszeitraum des Codes nicht möglich. Andererseits können mittels der Zeiteinschränkung flexibel z.B. Beginn, Ende und/ oder Dauer von Zeitintervallen definiert werden, die innerhalb des Gültigkeitszeitraums (d.h. eines definierten Zeitintervalls) liegen. Dadurch wird die Notwendigkeit für die Kontrolleinrichtung, eine Vielzahl von zweiten Prüfmerkmalen zu berechnen und mit dem ersten Prüfmerkmal aus dem Zugangscode zu vergleichen, vermieden.

Bei einem Systemintegrator kann es sich um eine Firma handeln, welche die Kontrolleinrichtung beim Kunden installiert.

Dem Systemintegrator und/ oder Betreiber des Systems steht mit diesem Verfahren ein mächtiges Werkzeug zur Verfügung, um die in der Sicherheitsbranche üblichen generellen Codes (welche vielfach auf mehreren Anlagen identisch sind) z.B. durch einen sicheren temporären Code mit Zeitbeschränkung zu ersetzen, bei dem der Gültigkeitszeitraum ein bestimmtes Datum repräsentiert.

Bei entsprechender Ausgestaltung des Zugangskontrollsystems ist zudem keine direkte Kommunikation zwischen der Kontrolleinrichtung und der Benutzerrechteverwaltung notwendig und auch bei Kenntnis des Prozesses zur Erzeugung des Zugangscodes ist keine unauthorisierte Erstellung von Zugangscodes möglich. Mit dem vorgeschlagenen System wird es ermöglicht, jeden Zugangscode eindeutig einem Benutzer zuzuordnen, wenn die Kennung ein entsprechendes Benutzermerkmal ist oder enthält.

Offenbart sei in diesem Zusammenhang auch ein Zugangskontrollsystem für ein Objekt wie z.B. ein Gebäude, welches dazu ausgebildet und insbesondere entsprechend programmiert ist, das in diesem Dokument beschriebene Verfahren auszuführen.

Mit dem beschriebenen Verfahren bzw. System ist es möglich, den Zugang z.B. auf bestimmte Gebäude, Personen und Zeiträume zu beschränken. Der Zugangscode kann generiert werden, ohne an der Kontrolleinrichtung Änderungen vornehmen zu müssen und es ist keine Datenverbindung zwischen Benutzerrechteverwaltung und Kontrolleinrichtung von Nöten bzw. vorhanden, die eine Manipulation der Kennungen erlauben würde. Zudem ist es möglich, bei einer Einschränkung der Berechtigungen (z.B. Mitarbeiterwechsel) diese Berechtigungsänderung ohne Wissen anderer Benutzer vorzugnehmen, denn zweckmässigerweise werden diese Berechtigungsänderungen (d.h. die Erzeugung gültiger erster Prüfmerkmale und Zugangscodes) bei einer zentralen Benutzerrechteverwaltung (z.B. einem Server) vorgenommen, welche unter der Kontrolle des jeweiligen Systemintegrators, Systembestreibers oder Dritten steht. Zu den Benutzern gehören in diesem Fall oft auch Mitarbeiter der genannten Firma, welche zur Ausführung von Service-Arbeiten an der Kontrolleinrichtung mit temporären Zugangscodes ausgestattet sind.

Nachfolgend werden weitere Ausgestaltungsformen der Erfindung beschrieben. Die in diesem Zusammenhang erwähnten Merkmale seien (individuell) als bevorzugte Merkmale zu betrachten, die einzeln oder in beliebiger Kombination verwirklicht sein können, vorausgesetzt sie schliessen sich nicht gegenseitig aus.

Nach einer bevorzugten Ausgestaltungsform der Erfindung handelt es sich beim Objekt um einen Gebäudekomplex, ein Gebäude, einen Teil eines Gebäudes, eine Datenbank und/ oder um ein Datenverarbeitungssystem wie z.B. einen Computer oder ein Computer-Netzwerk.

Bei der Benutzerrechteverwaltung kann es sich beispielsweise um einen Server handeln, der sich unter der Kontrolle des jeweiligen Ausstellers der Zugangscodes befindet. Der Zugang zu und der Betrieb von der Benutzerrechteverwaltung bzw. dem Server muss reglementiert sein, da es sich um eine sicherheitsrelevante Komponente handelt. Es ist auch denkbar, mit einer Benutzerrechteverwaltung Benutzer mit Zugangscodes für mehrere verschiedene Kontrolleinrichtungen zu versorgen, wenn die Berechtigungen korrekt verwaltet werden. Mehrere verschiedene Kontrolleinrichtungen können also einer gemeinsamen Benutzerrechteverwaltung zugeordnet sein.

Gemäss einer weiteren Ausgestaltungsvariante ist die Benutzerrechteverwaltung entfernt vom Objekt lokalisiert (insbesondere in einem Abstand von mehr als 0.05, 0.2, 0.5 oder 1 km davon). Es besteht aber auch die Möglichkeit die Benutzerrechteverwaltung im oder beim Objekt (d.h. bevorzugt in einem Abstand davon, der kleiner als der oben genannte ist) anzuordnen, beispielsweise in Form eines Sicherheitscenters einer grossen Industrieanlage oder eines Hochhauses.

Die Benutzerrechteverwaltung weist einen Datenspeicher auf, auf dem eine oder mehrere Kennungen gleicher oder verschiedener Art gespeichert sind. Diese können z.B. die Form einer Zeichenfolge haben. Zweckmässigerweise ist mindestens eine Kennung vorgesehen, wobei die Kennung eine Objektidentifikation ist, d.h. eine Information, welche einem bestimmten Objekt zugeordnet ist. Alternativ oder zusätzlich dazu kann eine Kennung vorgesehen sein, bei der es sich um ein Benutzermerkmal handelt, d.h. eine Information, welche einem bestimmten Benutzer oder einer bestimmten Gruppe von Benutzern zugeordnet ist. Zweckmässigerweise wird die Kennung bei der Erstinbetriebnahme des Zugangskontrollsystems oder der Kontrolleinrichtung durch den Systemintegrator definiert. Wenn es sich bei der Kennung um ein Benutzermerkmal handelt, so ist es zweckmässig, wenn dessen Zuordnung zu einem bestimmten Benutzer geändert werden kann, wobei das Benutzermerkmal selbst vorzugsweise über die Zeit unverändert bleibt. Eine solche Zuordnung kann beispielsweise in der Verknüpfung bzw. Verlinkung des Benutzermerkmals mit anderen benutzerspezifischen Informationen (z.B. Adresse, Sozialversicherungsnummer etc.) auf der Benutzerrechteverwaltung bestehen.

Weiterhin ist als Teil der Benutzerrechteverwaltung eine Schnittstelle zur Eingabe, Übergabe oder Auswahl eines Gültigkeitszeitraums vorgesehen. Der Gültigkeitszeitraum kann z.B. die Form einer Zeichenfolge haben, die ein bestimmtes Zeitintervall in der Gegenwart oder in der Zukunft definiert bzw. repräsentiert. Das kann ein bestimmter Tag bzw. ein Datum sein. Zweckmässigerweise wird auch der Gültigkeitszeitraum im Datenspeicher abgelegt.

Zudem ist eine Datenverarbeitungseinheit vorgesehen, die dazu ausgebildet ist, das erste Prüfmerkmal zu erzeugen. Dazu transformiert sie die Kennung und den Gültigkeitszeitraum mittels eines ersten Algorithmus, was eine entsprechende Programmierung der Datenverarbeitungseinheit voraussetzt. Beim ersten Algorithmus handelt es sich vorzugsweise um einen Algorithmus zur Verschlüsselung wobei es zweckmässig ist, wenn der erste Algorithmus eine Einwegfunktion ist oder enthält, vorzugsweise eine kryptographische Hash-Funktion wie z.B. den Message-Digest-Algorithm 5 (MD5) oder einen Secure-Hash-Algorithm (SHA). Der erste Algorithmus kann alternativ oder (was bevorzugt ist) zusätzlich eine umkehrbare bzw. entschlüsselbare kryptographische Funktion enthalten, wie z.B. Blowfish, wobei der verwendet Schlüssel geheim bleiben muss. Diese kann der Einwegfunktion in Bezug auf die Ausführungsreihenfolge vorgeschaltet sein. Die durch die Transformation generierte Zeichenfolge kann durch Kürzung (Auswahl einer Teilmenge von Zeichen aus der Zeichenfolge) oder Zusammenfassung von Zeichen auf eine bestimmte Länge festgelegt werden. Das erste Prüfmerkmal weist dann z.B. eine Länge von 3 bis 40 oder von 4 bis 15 Zeichen auf. Zweckmässigerweise wird die Zeichenfolge in eine Ziffernfolge oder eine Buchstabenfolge oder eine Kombination aus Buchstaben und Ziffern umgewandelt.

Die Datenverarbeitungseinheit ist weiterhin dazu ausgebildet, einen Zugangscode zu erzeugen. Dazu fügt sie dem ersten Prüfmerkmal eine Zeiteinschränkung hinzu. Die Zeiteinschränkung kann z.B. die Form einer Zeichenfolge haben, die einen bestimmten Zeitpunkt oder ein bestimmtes Zeitintervall in der Gegenwart oder in der Zukunft definiert bzw. repräsentiert. Das kann ein bestimmter Tag bzw. ein Datum sein. Die Zeiteinschränkung wird zweckmässigerweise im ersten Prüfmerkmal "versteckt", d.h. in einer nicht offensichtlichen Art und Weise mit dem ersten Prüfmerkmal verbunden. Es besteht z.B. die Möglichkeit, für die Zeiteinschränkung kein gängiges Uhrzeit-Format zu wählen, oder das erste Prüfmerkmal nach Hinzufügen der Zeiteinschränkung zu verschlüsseln. Im zweiten Fall ist vorgesehen, dass die Kontrolleinrichtung dazu ausgebildet ist, den Zugangscode zu entschlüsseln, bzw. die Zeiteinschränkung zu isolieren. Gemäss einer bevorzugten Ausgestaltungsvariante werden durch die Benutzerrechteverwaltung das erste Prüfmerkmal und die Zeiteinschränkung mittels eines zweiten Algorithmus transformiert, wobei der zweite Algorithmus eine umkehrbare kryptographische Funktion ist oder enthält.

Bevorzugt repräsentiert bzw. definiert der Gültigkeitszeitraum ein Zeitintervall, insbesondere ein Datum. Es kann zudem von Vorteil sein, wenn es sich dabei um ein sich nicht oder sich nicht periodisch wiederholendes Zeitintervall handelt (z.B. Datum mit Jahreszahl).

Die Zeiteinschränkung repräsentiert bzw. definiert vorzugsweise einen Zeitpunkt (z.B. eine Uhrzeit) oder ein kürzeres Zeitintervall als der Gültigkeitszeitraum. Sie kann einen sich (z.B. periodisch) wiederholenden Zeitpunkt respektive ein sich wiederholendes Zeitintervall definieren. Zweckmässigerweise definiert die Zeiteinschränkung einen Zeitpunkt, der innerhalb des Gültigkeitszeitraums liegt oder ein Zeitintervall das ganz oder teilweise innerhalb des Gültigkeitszeitraums liegt.

Vorzugsweise besteht der Zugangscode aus einer Zeichenfolge, wobei eine Ziffernfolge besonders bevorzugt ist. Die Anzahl der Zeichen oder Ziffern beträgt zweckmässigerweise zwischen 3 und 40, insbesondere zwischen 4 und 15 und besonders bevorzugt zwischen 6 und 12. Dies ist insbesondere dann sinnvoll, wenn der Zugangscode dem Benutzer zur Kenntnis gebracht und von diesem manuell (z.B. über ein Tastenfeld) an die Kontrolleinrichtung übergeben werden muss (vgl. weiter unten).

Nachdem der Zugangscode generiert wurde, muss er (direkt oder indirekt) von der Benutzerrechteverwaltung an den Benutzer übergeben werden. Dies geschieht mittels einer Schnittstelle. Im Prinzip ist es nicht notwendig, dass der Zugangscode dem Benutzer zur Kenntnis gebracht wird. Er könnte auch auf einem elektronischen Gerät oder Speichermedium (z.B. einer Speicherkarte oder einem tragbaren Computer, insbesondere einem Smartphone), welches der Benutzer bei sich führt, abgelegt und von diesem später an die Kontrolleinrichtung übermittelt werden. In diesem Fall ist die Länge und Form des Zugangscodes natürlich nicht von wesentlicher Bedeutung. Bevorzugt ist es jedoch, wenn der Zugangscode dem Benutzer bei der Übermittlung zur Kenntnis gelangt. Die Übermittlung erfolgt zweckmässigerweise über eine Benutzerschnittstelle, die den Zugangscode z.B. auf einem Bildschirm anzeigt.

Es besteht die Möglichkeit, dass die Übermittlung des Zugangscodes an den Benutzer unabhängig von einer durch den Benutzer vorgenommenen Handlung erfolgt. Alternativ kann der Benutzer den Zugangscode (direkt oder indirekt, z.B. über seinen Vorgesetzten) bei der Benutzerrechteverwaltung anfordern bzw. beziehen. Beide Vorgänge können auch automatisiert sein und z.B. periodisch oder in Abhängigkeit eines definierten Prozesses (z.B. eines Zeitplans) erfolgen.

Nach einer weiteren Ausgestaltungsvariante findet vor der Übermittlung des Zugangscodes von der Benutzerrechteverwaltung an den Benutzer eine Authentifizierung des Benutzers statt. Der Benutzer kann zu diesem Zweck einen Authentifizierung-Code an die Benutzerrechteverwaltung übermitteln. Dabei kann es sich um eine benutzerspezifische Information (z.B. ein Passwort) oder eine für die Kontrolleinrichtung charakteristische Zeichenfolge (z.B. Nummer oder Bezeichnung der Kontrolleinrichtung) handeln. Benutzerspezifische Informationen können Informationen umfassen die spezifisch für bestimmte Benutzer oder für bestimmte Benutzergruppen sind.

Es besteht auch die Möglichkeit, den Benutzer über ein zur Kontaktaufnahme mit der Benutzerrechteverwaltung verwendetes Kommunikationsmittel bzw. Kommunikationsform zu identifizieren. Kommunikationsmittel wie Mobiltelefone können nämlich oft bestimmten Personen zugeordnet werden. Die übermittelte Telefonnummer oder Hardwarekennung des Kommunikationsmittels (d.h. eine kommunikationsmittelspezifische Information) wirkt in diesem Fall gleichsam als Authentifizierung-Code. Es können z.B. Telefonnummern, E-Mail-Adressen, Hardwarekennungen oder andere kommunikationsmittelspezifische Informationen bei der Benutzerrechteverwaltung hinterlegt werden, damit die Übermittlung des Zugangscodes (z.B. per SMS oder E-Mail) zuverlässig an ein bestimmtes Kommunikationsmittel (Gerät oder Benutzerkonto/ Adresse) und damit an den autorisierten Benutzer erfolgen kann. Kommunikationsmittelspezifische Informationen sind in diesem Sinne also eine Unterkategorie der benutzerspezifischen Informationen, da sie auf der Benutzerrechteverwaltung mit benutzerspezifischen Informationen verknüpft bzw. verlinkt sind. Es ist also bevorzugt, wenn die Übermittlung des Zugangscodes von der Benutzerrechteverwaltung an den Benutzer mittels einer dem Benutzer zuordenbaren Übermittlungseinrichtung oder Kommunikationsmittel erfolgt, insbesondere mittels SMS oder E-Mail.

Allgemein ausgedrückt ist es zweckmässig, wenn ein Authentifizierungs-Code jeweils einem Benutzer oder einer bestimmten Gruppe von Benutzern zugeordnet ist. Zu diesem Zweck kann der Authentifizierungs-Code eine Information sein oder mit einer Information verknüpft sein, die dem genannten Benutzer zugeordnet werden kann bzw. diesen identifiziert (benutzerspezifische Information). Diese benutzerspezifischen Informationen sind zweckmässigerweise auf der Benutzerrechteverwaltung hinterlegt. Es kann zudem vorgesehen sein, dass der Authentifizierungs-Code bzw. die benutzerspezifische Information mit (ebenfalls auf der Benutzerrechteverwaltung hinterlegten) Informationen verknüpft bzw. verlinkt ist, die die Berechtigung des/der entsprechenden Benutzers/Benutzergruppe festlegen, d.h. Informationen, die definieren, zu welchen Objekten oder Teilen von Objekten der/ die Benutzer/Benutzergruppe Zugang hat.

Die Kontrolleinrichtung ist dazu ausgebildet, den Zugang oder Zugriff zu bzw. auf das Objekt zu kontrollieren. Zweckmässigerweise ist sie dazu ganz oder teilweise am Ort des Objekts lokalisiert (insbesondere in einem Abstand von weniger als 1, 0.5, 0.2 oder 0.05 km davon). Dies gilt zumindest für denjenigen Teil, der dazu ausgebildet ist, den Zugang bzw. Zugriff zum Objekt freizugeben (z.B. eine Schliessanlage) und vorzugsweise auch für die Benutzerschnittstelle (z.B. ein Tastenfeld) zur Übergabe des Zugangscodes vom Benutzer an die Kontrolleinrichtung, obwohl die Benutzerschnittstelle prinzipiell auch entfernt vom Objekt (also in einem grösseren als dem oben genannten Abstand dazu) positioniert sein könnte.

Es ist vorgesehen, dass die Kontrolleinrichtung einen Datenspeicher aufweist, auf dem dieselbe Kennung (oder Mehrzahl von Kennungen) gespeichert ist wie bei der Benutzerrechteverwaltung. Zweckmässigerweise ist es nur durch den Systemintegrator möglich, neue Kennungen auf der Kontrolleinrichtung zu erstellen oder diese zu ändern. Es kann sogar vorgesehen sein, dass nur eine einzige Kennung definiert, d.h. bei der Kontrolleinrichtung hinterlegt ist. Die Erzeugung von Zugangscodes und damit die Berechtigungsänderung erfolgt dann immer basierend auf dieser einen Kennung. Alternativ können auch mehrere verschiedene Kennungen bei der Kontrolleinrichtung gespeichert bzw. hinterlegt sein, beispielsweise eine Objektinformation und eine oder eine Mehrzahl von Benutzermerkmalen (vgl. weiter oben).

Bei der Benutzerschnittstelle zur Übergabe des Zugangscodes vom Benutzer an die Kontrolleinrichtung handelt es sich vorzugsweise um eine manuelle, akustische, optische oder eine Datenschnittstelle. Besonders bevorzugt sind Tastenfelder (Knöpfe, Touchscreen etc.) oder andere berührungs- oder bewegungsempfindliche Eingabevorrichtungen. Denkbar ist aber auch eine Eingabe via Spracherkennung.

Die Kontrolleinrichtung besitzt eine Datenverarbeitungseinheit, die fünf Funktionen übernimmt und dazu eine entsprechende Programmierung aufweist. Erstens erzeugt sie ein zweites Prüfmerkmal. Dies geschieht, indem eine Kennung aus dem Datenspeicher und ein vom Zeitmessinstrument ermittelter aktueller Zeitraum mittels des ersten Algorithmus transformiert werden.

Zweitens ist sie dazu ausgebildet, das erste Prüfmerkmal und/ oder die Zeiteinschränkung aus dem ihr vom Benutzer übergebenen Zugangscode zu isolieren.

Drittens übernimmt sie die Aufgabe, das zweite Prüfmerkmal mit dem ersten Prüfmerkmal zu vergleichen.

Viertens vergleicht sie die Zeiteinschränkung aus dem Zugangscode mit einer vom Zeitmessinstrument ermittelten aktuellen Zeitinformation.

Fünftens gibt sie abhängig von den beiden Vergleichsergebnissen den Zugang oder Zugriff auf das Objekt ganz oder teilweise frei oder verweigert diesen. Die Freigabe kann z.B. über die Betätigung einer Schliessanlage erfolgen.

Es kann sich sowohl bei der Zeiteinschränkung im Zugangscode als auch bei der vom Zeitmessinstrument ermittelten Zeitinformation entweder um ein Zeitintervall (gegebenenfalls definiert durch einen oder mehrere Zeitpunkte, die z.B. Beginn und/oder Ende des Zeitintervalls markieren) oder um einen Zeitpunkt handeln. Der Zugang zum Objekt wird gewährt, wenn sich entweder die Zeitintervalle ganz oder teilweise decken oder (falls die Zeiteinschränkung oder die Zeitinformation einen Zeitpunkt definiert) der Zeitpunkt innerhalb des damit zu vergleichenden Zeitintervalls liegt.

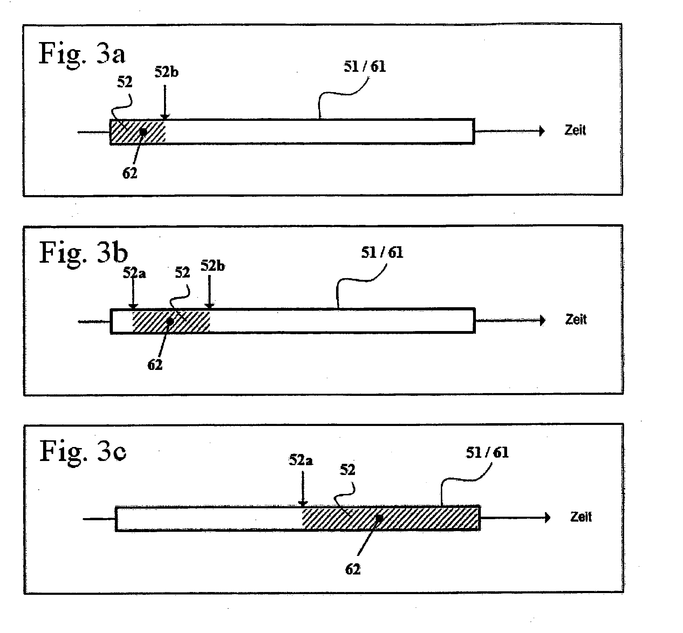

Beispielsweise kann sowohl die Zeiteinschränkung im Zugangscode als auch die vom Zeitmessinstrument ermittelte Zeitinformation jeweils einen Zeitpunkt repräsentieren. Der Zugang zum Objekt wird nur dann freigegeben, wenn der eine Zeitpunkt (Zeitinformation) vor oder nach dem anderen Zeitpunkt (Zeiteinschränkung) liegt. Im Prinzip definiert hier der eine Zeitpunkt (Zeiteinschränkung) also den Beginn (vgl. Variante 3 in Fig. 3c) oder das Ende (vgl. Variante 1 in Fig.3a) eines Zeitintervalls und der andere Zeitpunkt (Zeitinformation) muss für die Freigabe des Zugangs innerhalb dieses Zeitintervalls liegen.

Alternativ kann die Zeiteinschränkung ein Zeitintervall festlegen durch die Definition sowohl des Startzeitpunkts als auch des Endzeitpunkts (vgl. Variante 2 in Fig.3b).

Begriffe in diesem Dokument sollen bevorzugt so verstanden werden, wie sie ein Fachmann auf dem Gebiet der Sicherheitstechnik verstehen würde. Insbesondere für den Fall, dass Unklarheiten bestehen sollten, können die in diesem Dokument aufgeführten bevorzugten Definitionen (alternativ oder ergänzend) herangezogen werden.

Vorzugsweise besitzt eine Einwegfunktion die folgenden Eigenschaften: Es existiert ein Algorithmus, der den Funktionswert y=f(x) in Polynomialzeit berechnen kann, und es existiert kein probabilistischer Algorithmus, der die Berechnung eines beliebigen Inversen zu einem bekannten Funktionswert y (d. h. einem x, sodass f(x) = y) in Polynomialzeit erlaubt. Alternativ oder zusätzlich dazu besitzt eine Einwegfunktion die Eigenschaft, dass die Berechnung eines beliebigen Inversen zu einem bekannten Funktionswert mittels des schnellsten gegenwärtig verfügbaren Computers mehr als eine Woche, einen Monat oder ein Jahr dauert.

Die Erfindung betrifft zusammengefasst vorzugsweise ein Verfahren zur Verwaltung von temporären Benutzerrechten für Objekte z.B. für Gebäude, bei dem: Durch eine Benutzerrechteverwaltung ein erstes Prüfmerkmal erzeugt wird, indem eine bei der Benutzerrechteverwaltung hinterlegte Kennung und ein Gültigkeitszeitraum mittels eines ersten Algorithmus transformiert werden; durch die Benutzerrechteverwaltung ein Zugangscode erzeugt wird, indem dem ersten Prüfmerkmal eine Zeiteinschränkung hinzugefügt wird; der Zugangscode von der Benutzerrechteverwaltung an einen Benutzer übermittelt wird; der Zugangscode vom Benutzer an eine am Ort des Objekts lokalisierte Kontrolleinrichtung übermittelt wird; durch die Kontrolleinrichtung ein zweites Prüfmerkmal erzeugt wird, indem eine bei der Kontrolleinrichtung hinterlegte Kennung und ein aktueller Zeitraum, welcher durch ein der Kontrolleinrichtung zugeordnetes Zeitmessinstrument ermittelt wurde, mittels des ersten Algorithmus transformiert werden; die Kontrolleinrichtung das erste Prüfmerkmal aus dem Zugangs Code isoliert und es dann mit dem zweiten Prüfmerkmal vergleicht und abhängig vom Vergleichsergebnis den Zugang zum Objekt freigibt (erste Bedingung); und die Kontrolleinrichtung die Zeiteinschränkung aus dem Zugangs Code isoliert und sie dann mit einer Zeitinformation, welche durch ein der Kontrolleinrichtung zugeordnetes Zeitmessinstrument ermittelt wurde, vergleicht und abhängig vom Vergleichsergebnis den Zugang zum Objekt freigibt (zweite Bedingung).

Wie bereits erwähnt sei zudem ein Zugangskontrollsystem für ein Objekt wie z.B. ein Gebäude offenbart, welches dazu ausgebildet ist, das in diesem Dokument beschriebene Verfahren auszuführen. Ein solches Zugangskontrollsystem kann z.B. folgende Komponenten beinhalten:
a) eine (vorzugsweise entfernt vom Objekt lokalisierte) Benutzerrechteverwaltung mit
   - einem Datenspeicher, auf dem eine Kennung (oder eine Mehrzahl von Kennungen) gespeichert ist,
   - einem Eingabegerät zur Eingabe oder Auswahl eines Gültigkeitszeitraums (dieser kann vorzugsweise frei vorgegeben oder aus einer Mehrzahl möglicher und/oder gespeicherter Gültigkeitszeiträume ausgewählt werden),
   - einer Datenverarbeitungseinheit, die dazu ausgebildet ist, ein erstes Prüfmerkmal zu erzeugen, und zwar durch Transformation bzw. Umwandlung der Kennung und des Gültigkeitszeitraums mittels eines ersten Algorithmus,
   - einer Benutzerschnittstelle zur Übergabe des ersten Prüfmerkmals an einen Benutzer, und
b) eine (vorzugsweise am Ort des Objekts lokalisierte) Kontrolleinrichtung mit
   - einem Datenspeicher, auf dem dieselbe Kennung (oder Mehrzahl von Kennungen) gespeichert ist,
   - einer Benutzerschnittstelle zur Übergabe eines Zugangscodes (beinhaltend das erste Prüfmerkmal) vom Benutzer an die Kontrolleinrichtung,
   - einem Zeitmessinstrument,
   - einer Datenverarbeitungseinheit, die dazu ausgebildet ist,
      einerseits ein zweites Prüfmerkmal zu erzeugen durch Transformation bzw. Umwandlung der Kennung und eines vom Zeitmessinstrument ermittelten aktuellen Zeitraums mittels des ersten Algorithmus, und
      andererseits das zweite Prüfmerkmal mit dem ersten Prüfmerkmal zu vergleichen und abhängig vom Vergleichsergebnis den Zugang zum Objekt freizugeben, wobei sich das Zugangskontrollsystem dadurch auszeichnet, dass
   - die Datenverarbeitungseinheit der Benutzerrechteverwaltung dazu ausgebildet ist, den Zugangscode zu erzeugen und zwar durch Hinzufügen einer Zeiteinschränkung zum ersten Prüfmerkmal, wobei es bevorzugt ist, wenn die Zeiteinschränkung ebenfalls mittels eines Eingabegeräts eingegeben oder ausgewählt werden kann (vorzugsweise kann sie frei vorgegeben oder aus einer Mehrzahl möglicher und/oder gespeicherter Zeiteinschränkungen ausgewählt werden), und
   - die Datenverarbeitungseinheit der Kontrolleinrichtung dazu ausgebildet ist, das erste Prüfmerkmal aus dem Zugangscode zu isolieren, und
   - die Datenverarbeitungseinheit der Kontrolleinrichtung dazu ausgebildet ist, die Zeiteinschränkung aus dem Zugangscode zu isolieren und sie dann mit einer Zeitinformation (welche durch ein der Kontrolleinrichtung zugeordnetes Zeitmessinstrument ermittelt wurde) zu vergleichen und abhängig vom Vergleichsergebnis den Zugang zum Objekt freizugeben.

Beim Zeitmessinstrument, welches den (vorzugsweise aktuellen) Zeitraum ermittelt und demjenigen, welches die (vorzugsweise aktuelle) Zeitinformation ermittelt, kann es sich um dasselbe oder um zwei verschiedene Zeitmessinstrumente handeln. Zudem ist es bevorzugt, wenn die Benutzerrechteverwaltung ebenfalls entsprechende Zeitmessinstrumente aufweist. Diese laufen zweckmässigerweise synchron, d.h. sie ermitteln zu einem festgelegten Zeitpunkt im Wesentlichen dieselben Werte.

Die Kennungen können natürlich auch verschlüsselt (durch eine umkehrbare kryptographische Funktion oder eine Einwegfunktion) bei der Kontrolleinrichtung und bei der Benutzerrechteverwaltung gespeichert sein, z.B. als Hash-Werte.

### Kurze Beschreibung der Zeichnungen

Es zeigt:
- Fig. 1: in Form eines Flussdiagramms den Ablauf des Verfahrens zur Generierung des Prüfmerkmals durch die Benutzerrechteverwaltung (erstes Prüfmerkmal) und die Kontrolleinrichtung (zweites Prüfmerkmal);
- Fig. 2: in Form zweier Flussdiagramme einerseits den Ablauf des Verfahrens zur Generierung des Zugangscodes unter Verwendung des ersten Prüfmerkmals mit der Integration der Zeiteinschränkung und andererseits die Verfahrensschritte zwischen der Übergabe des Zugangscodes an die Kontrolleinrichtung und der Freigabe des Zugangs zum Objekt;
- Fig. 3a-c: drei Varianten der Definition einer Zeiteinschränkung und deren Abgleich mit der vom Zeitmessinstrument der Kontrolleinrichtung ermittelten Zeitinformation; und
- Fig. 4: die Interaktion zwischen Benutzer und Benutzerrechteverwaltung bzw. Kontrolleinrichtung.

### Ausführung der Erfindung

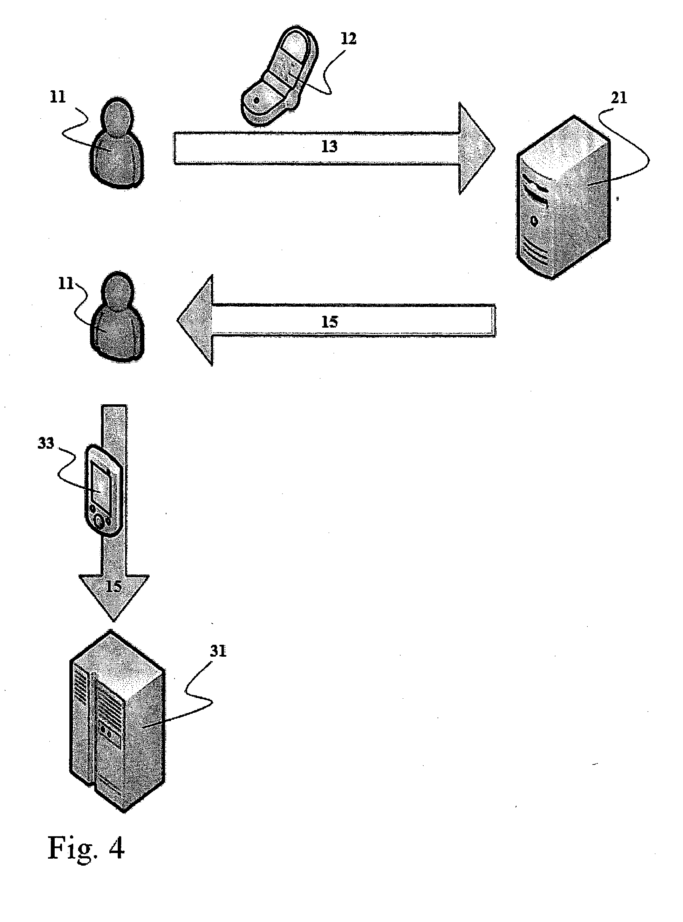

Die Erfindung wird nachfolgend anhand der Zeichnungen beispielhaft erläutert.

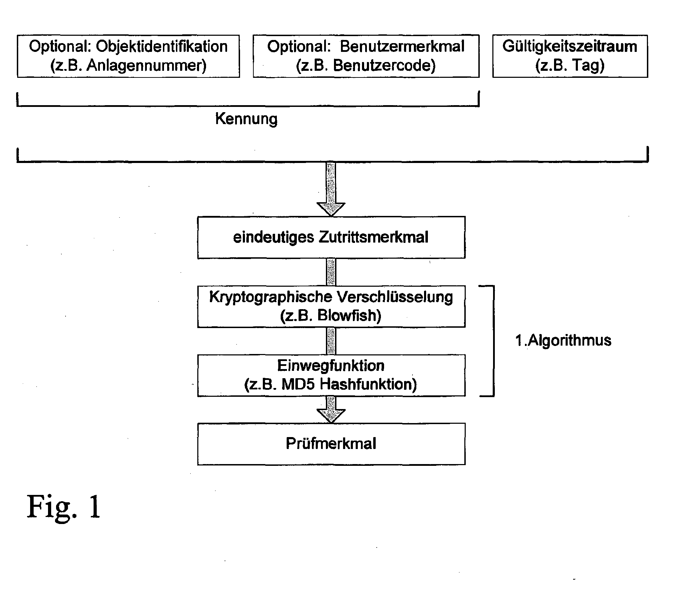

Fig. 1 zeigt die Erstellung eines Prüfmerkmals durch die Benutzerrechteverwaltung oder die Kontrolleinrichtung. Dazu werden eine oder mehrere Kennungen zusammen mit einem Gültigkeitszeitraum mittels eines ersten Algorithmus transformiert. Diese Transformation kann aus mehreren Schritten bestehen. Im vorliegenden Beispiel wird in einem ersten Schritt eine Objektidentifikation und/oder ein Benutzermerkmal (d.h. eine Kennung) mit dem Gültigkeitszeitraum zu einem eindeutigen Zutrittsmerkmal verbunden. Liegen die Kennung und der Gültigkeitszeitraum als Zeichenfolgen vor, können diese z.B. einfach aneinandergereiht werden. Anschliessend folgt eine kryptographische Verschlüsselung des Zutrittsmerkmals und schliesslich eine Transformation mittels einer Einwegfunktion. Die Kennung und der Gültigkeitszeitraum lassen sich somit nicht mehr aus dem ersten Prüfmerkmal isolieren.
   Wie erwähnt werden im gezeigten Beispiel zwei Kennungen verwendet. Die Objektidentifikation kann z.B. eine Anlagennummer sein, die einer bestimmten Kontrolleinrichtung zugeordnet ist und vom Systemintegrator definiert wird. Das Benutzermerkmal ist einem Benutzer oder einer Benutzergruppe zugeordnet und kann z.B. vom Systemintegrator oder vom Endkunden definiert werden. Prinzipiell ist jede benutzerspezifische Information geeignet, wobei die Information auch nur in dem Sinne benutzerspezifisch sein kann, dass sie einer benutzerspezifischen Information zugeordnet bzw. in der Datenbank der Benutzerrechteverwaltung mit einer solchen verknüpft ist. Als Beispiel sei ein Benutzercode genannt, dessen Zuordnung zu einer anderen benutzerspezifischen Information (z.B. Name, Adresse, Telefonnummer) auf der Benutzerrechteverwaltung bei Bedarf geändert werden kann. Im Datenspeicher der Kontrolleinrichtung müssen natürlich nur das/ die Benutzermerkmal/e aber nicht irgendwelche zusätzlichen benutzerspezifischen Informationen mit denen das Benutzermerkmal verknüpft ist, gespeichert sein.
   Der Gültigkeitszeitraum kann z.B. das aktuelle Datum oder ein Datum in der Zukunft sein.
   Die Transformation mittels der Einwegfunktion besteht im vorliegenden Fall in der Bildung eines Hash-Wertes (MD5-Summe). Der Hash-Wert wird anschliessend gekürzt, in eine Zahl (z.B. 32bit) umgewandelt und auf die 6 letzten Stellen reduziert. Die weitere Verarbeitung und Kürzung der von der Hash-Funktion generierten Zeichenfolge ist dem Umstand geschuldet, dass der aus dem ersten Prüfmerkmal gebildete Zugangscode später vom Benutzer über eine Benutzerschnittstelle mit einem Tastenfeld an die Kontrolleinrichtung übergeben werden soll und deshalb eine beschränkte Komplexität und Länge aufweisen muss. Würde der Zugangscode stattdessen auf andere Weise übermittelt (z.B. durch das Auslesen eines vom Benutzer mitgeführten Datenspeichers durch die Benutzerschnittstelle der Kontrolleinrichtung), so wäre die Länge des ersten Prüfmerkmals bzw. des Zahlencodes von untergeordneter Bedeutung.

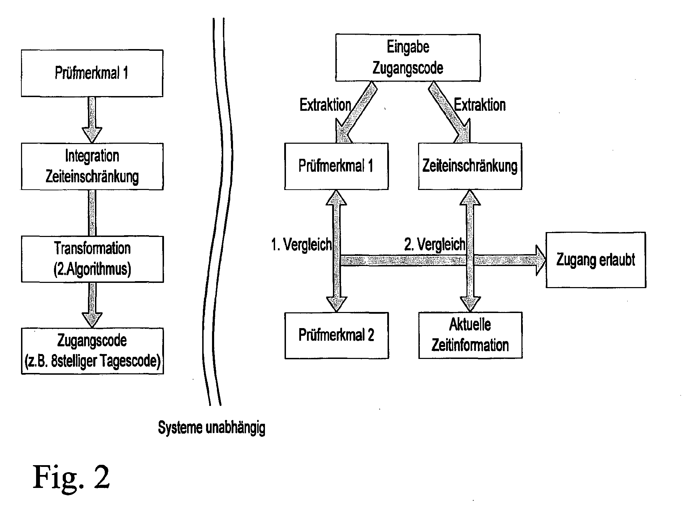

Fig. 2 beschreibt einerseits die Erstellung eines Zugangscodes aus dem ersten Prüfmerkmal durch die Benutzerrechteverwaltung (linke Seite) und andererseits den Ablauf des Authentifizierungsprozesses bei der Kontrolleinrichtung (rechte Seite.
   Der Zugangscode wird erstellt, indem das erste Prüfmerkmal mit einer Zeiteinschränkung verbunden bzw. versehen wird. Die Zeiteinschränkung kann z.B. aus zwei Zeichen bestehen und einen Zeitpunkt oder eine Zeitspanne innerhalb des Gültigkeitszeitraums repräsentieren (z.B. eine Uhrzeit oder eine von 96 Viertelstunden eines Tages etc.). Liegen die Zeiteinschränkung und das erste Prüfmerkmal als Ziffernfolgen oder einzelne Ziffern vor, so kann die Ziffer bzw. Ziffernfolge der Zeiteinschränkung gemeinsam oder in Teilen an vordefinierten Positionen an den Enden oder innerhalb des Prüfmerkmals eingesetzt werden. Die Positionen können durch einen Algorithmus definiert sein und/oder von bestimmten Parametern wie z.B. der Zeiteinschränkung selbst, dem aktuellen Datum etc. abhängig sein, d.h. sie müssen sich nicht immer an denselben Stellen innerhalb des ersten Prüfmerkmals befinden. Es besteht auch die Möglichkeit, nach der Verbindung des ersten Prüfmerkmals und der Zeiteinschränkung das Resultat mittels eines zweiten (umkehrbaren) Algorithmus zu verschlüsseln. Aus dem nun vollständigen Zugangscode kann wegen der Einwegverschlüsselung des ersten Prüfmerkmals kein Rückschluss auf die Kennungen oder den Gültigkeitszeitraum, d.h. das Datum an dem der Zugangscode gültig ist, gezogen werden. Es ist jedoch möglich, die Zeiteinschränkung, d.h. z.B. eine Ablaufzeit zu extrahieren, wenn bekannt ist, wie diese in den Zugangscode integriert bzw. darin versteckt wurde.
   Zusammengefasst wird von der Benutzerverwaltung (vgl. Fig.1 und 2 links) also einer Kennung (z.B. Objektidentifikation oder Benutzermerkmal) ein Gültigkeitszeitraum hinzugefügt; anschliessend erfolgt eine Transformation mittels eines ersten Algorithmus (z.B. Verschlüsselung und Einwegfunktion), woraus sich ein erstes Prüfmerkmal ergibt, welchem dann eine Zeiteinschränkung hinzugefügt wird, inklusive einer optionalen zweiten Transformation mittels eines (umkehrbaren) zweiten Algorithmus.
   Der Zugangscode wird an den Benutzer übermittelt, sei dies direkt oder indirekt. Der Ablauf der Übermittlung wird in Fig.4 genauer erläutert. Der Benutzer, welcher im Besitz eines Zugangscodes ist und Zugang zu einem Objekt (z.B. Gebäude) mit einer Kontrolleinrichtung begehrt, übergibt diesen via eine Benutzerschnittstelle (z.B. Tastenfeld) an die Kontrolleinrichtung. Der anschliessende Authentifizierungsprozess ist in der rechten Hälfte der Fig.2 dargestellt. In einem ersten Schritt erfolgt durch die Kontrolleinrichtung eine Extraktion des ersten Prüfmerkmals und der Zeiteinschränkung aus dem Zugangscode. Dies entspricht normalerweise der Umkehrung des Verfahrens zur Verbindung der Zeiteinschränkung mit dem ersten Prüfmerkmal. Die Kontrolleinrichtung generiert in einem analogen Prozess wie er für die Benutzerrechteverwaltung beschrieben wurde ein zweites Prüfmerkmal. Die für die Erstellung des ersten Prüfmerkmals verwendeten Kennungen sind auch bei der Kontrolleinrichtung hinterlegt. Die Kontrolleinrichtung weist zudem ein Zeitmessinstrument auf, welches einen aktuellen Zeitraum ermittelt (z.B. das aktuelle Datum). Die Kennung und der aktuelle Zeitraum werden mittels des oben beschriebenen ersten Algorithmus transformiert, wodurch das zweite Prüfmerkmal erhalten wird. Der Unterschied bei der Erstellung des ersten und zweiten Prüfmerkmals besteht also in der Verwendung des Gültigkeitszeitraums (erstes Prüfmerkmal) gegenüber der Verwendung des aktuellen Zeitraums (zweites Prüfmerkmal). Während der Gültigkeitszeitraum festgelegt bzw. vorgegeben werden kann und damit auch einen Zeitpunkt oder ein Zeitintervall in der Zukunft definieren kann, stammt der aktuelle Zeitraum, welcher zur Erstellung des zweiten Prüfmerkmals herangezogen wird, vom Zeitmessinstrument und repräsentiert einen aktuellen Zeitpunkt oder ein aktuelles Zeitintervall.
   Das zweite Prüfmerkmal wird durch die Kontrolleinrichtung mit dem ersten Prüfmerkmal verglichen. Zudem wird von einem der Kontrolleinrichtung zugeordneten Zeitmessinstrument eine aktuelle Zeitinformation ermittelt. Dabei handelt es sich um ein Zeitintervall oder einen Zeitpunkt innerhalb des aktuellen Zeitraums. Diese Zeitinformation wird mit der aus dem Zugangscode extrahierten Zeiteinschränkung verglichen. Abhängig vom Vergleich des ersten Prüfmerkmals mit dem zweiten Prüfmerkmal und dem Vergleich der Zeitinformation mit der Zeiteinschränkung wird der Zugang zum Objekt nicht, teilweise oder ganz freigegeben. Für eine Freigabe müssen das erste und das zweite Prüfmerkmal normalerweise identisch sein und die Zeitinformation muss in einer bestimmten Beziehung zur Zeiteinschränkung stehen (z.B. davor, danach oder darin liegen; vgl. Fig.3a-c).
   Die Fig. 3a, 3b und 3c beschreiben drei Varianten von Beziehungen zwischen Zeiteinschränkungen 52 (aus dem Zugangscode) und Zeitinformationen 62 (vom Zeitmessinstrument der Kontrolleinrichtung).
   Bei Variante 1 (Fig.3a) repräsentiert die Zeiteinschränkung 52 ein Zeitintervall welches lediglich durch einen Endzeitpunkt 52b definiert ist. Da die Zeiteinschränkung 52 eine Teilmenge des Gültigkeitszeitraums 51 ist, definiert sich der Anfangszeitpunkt des Zeitintervalls 52 durch den Beginn des Gültigkeitszeitraums 51. Liegt nun die vom Zeitmessinstrument ermittelte Zeitinformation 62, welche im vorliegenden Fall einen Zeitpunkt definiert, innerhalb des Zeitintervalls 52, so ist eine zweite notwendige Bedingung (neben der Identität des ersten und zweiten Prüfmerkmals) für die Freigabe des Zugangs zum Objekt erfüllt.
   Variante 2 (Fig. 3b) unterscheidet sich von Variante 1 dadurch, dass das Zeitintervall 52 bzw. die Zeiteinschränkung sowohl durch einen Anfangszeitpunkt 52a als auch durch einen Endzeitpunkt 52b definiert ist, d.h. dass sich der Anfangszeitpunkt 52a nicht automatisch aus dem Beginn des Gültigkeitszeitraums 51 ergibt.
   Bei der Variante 3 (Fig. 3c) repräsentiert die Zeiteinschränkung 52 ein Zeitintervall welches lediglich durch einen Anfangszeitpunkt 52a definiert ist. Da die Zeiteinschränkung 52 eine Teilmenge des Gültigkeitszeitraums 51 ist, definiert sich der Endzeitpunkt des Zeitintervalls 52 durch das Ende des Gültigkeitszeitraums 51. Ansonsten entspricht die Variante 3 der Variante 1.
   Bei den beschriebenen Beispielen wird natürlich davon ausgegangen, dass der Gültigkeitszeitraum 51, der zur Erzeugung des ersten Prüfmerkmals verwendet wurde, dem aktuellen Zeitraum 61 entspricht, der zur Erzeugung des zweiten Prüfmerkmals eingesetzt wurde.
Fig. 4 beschreibt den Ablauf des Gesamtprozesses von der Anforderung eines Zugangscodes 15 bis zur Authentifizierung des Benutzers 11 bei der Kontrolleinrichtung 31.

In einem ersten Schritt fordert ein Benutzer 11 einen Zugangscode 15 bei der Benutzerrechteverwaltung 21 an, bei der es sich hier um einen Server handelt. Dies geschieht im vorliegenden Fall über ein Kommunikationsmittel 12, z.B. ein Mobiltelefon, wobei auch eine andere Benutzerschnittstelle denkbar ist. Die Kontaktaufnahme des Benutzers 11 mit der Benutzerrechteverwaltung 21 geht einher mit der Übermittlung eines Authentifizierungs-Codes 13, der es der Benutzerrechteverwaltung 21 erlaubt, zu ermitteln, welcher Benutzer 11 oder welche Benutzergruppe einen Zugangscode 15 anfordert. Die Telefonnummer des verwendeten Mobiltelefons repräsentiert im gezeigten Beispiel den Authentifizierungscode. Zusätzlich findet der Versand einer SMS mit einer objektspezifischen Information (z.B. die Nummer der Kontrolleinrichtung 31) und/oder einer benutzerspezifischen Information (z.B. ein Passwort) vom Benutzer 11 an die Benutzerrechteverwaltung 21 statt. Diese objekt- oder benutzerspezifische Information - sofern sie nur einer berechtigten Gruppe von Benutzern bekannt ist - stellt einen zweiten Authentifizierungs-Code dar, der die Sicherheit weiter erhöht. Dies als Beispiel, wie eine Authentifizierung vonstatten gehen könnte. Wichtig ist, dass die Benutzerrechteverwaltung 21 in die Lage versetzt wird, mit ausreichender Sicherheit zu ermitteln, ob die Anfrage von einem berechtigten Benutzer 11 stammt. Die Authentifizierungs-Codes 13 (Benutzernamen, Telefonnummern, E-Mail-Adressen, Hardwarekennungen von mobilen Geräten oder Passwörter etc.) sind in einem Datenspeicher der Benutzerrechteverwaltung 21 hinterlegt. Wenn der vom Benutzer 11 übermittelte Authentifizierungs-Code 13 mit einer solchen bei der Benutzerrechteverwaltung 21 hinterlegten und einem berechtigen Benutzer zugeordneten Information übereinstimmt, so findet eine Übermittlung eines Zugangscodes 15 von der Benutzerrechteverwaltung 21 an den Benutzer 11 statt (Schritt drei). Der Benutzer 11 kann zudem eine Zeiteinschränkung (d.h. einen gewünschten Zugangszeitpunkt) an die Benutzerrechteverwaltung übermitteln. Diese kann von der Benutzerrechteverwaltung 21 mit dort hinterlegten benutzerspezifischen Informationen (z.B. einem Zeitplan mit für diesen Benutzer zulässigen Zugangszeitpunkten) verglichen werden. Zweckmässigerweise werden alle angeforderten Zugangscodes 15 auf dem Server (Benutzerrechteverwaltung 21) protokolliert. Zudem besteht die Möglichkeit, dass der Zugangscode 15 dem Benutzer 11 sowohl den Zugang zu einem Objekt ermöglicht, als auch die erfolgreiche Authentifizierung/ Anmeldung bei zum Objekt zugehörigen Einrichtungen wie z.B. Computern.

Der zweite Schritt besteht in der Erstellung des Zugangscodes 15, welcher beispielhaft anhand der Fig.1 und 2 erläutert wurde. Der Zugangscode 15 kann generiert werden bevor oder nachdem der Benutzer 11 einen solchen bei der Benutzerrechteverwaltung 21 anfordert.

Im dritten Schritt erfolgt die Übermittlung des Zugangscodes 15 via eine Benutzerschnittstelle an den Benutzer 11. Als Benutzerschnittstelle dient zweckmässigerweise das Kommunikationsmittel 12, welches zur Authentifizierung des Benutzers 11 bzw. zur Anforderung des Zugangscodes 15 eingesetzt wurde.

Der vierte Schritt besteht in der Übermittlung des Zugangscodes 15 vom Benutzer 11 an die Kontrolleinrichtung 31, welche den Zugang zu einem Objekt (z.B. einem Gebäude) kontrolliert. Die Kontrolleinrichtung 31 kann dazu beispielsweise eine Schliessanlage betätigen. Die Übermittlung geschieht über eine Benutzerschnittstelle 33, welche mit Vorteil am Ort des Objekts bzw. Gebäudes angeordnet ist und/oder so ausgebildet ist (z.B. als Tastenfeld), dass eine Übermittlung des Zugangscodes 15 die Anwesenheit des Benutzers an besagtem Ort voraussetzt.

Im fünften Schritt wird die Gültigkeit des eingegebenen Zugangscodes 15 von der Kontrolleinrichtung 31 geprüft. Der Ablauf des Verfahrens ist in Fig. 2 gezeigt und umfasst die Isolation des ersten Prüfmerkmals und der Zeiteinschränkung aus dem übermittelten Zugangscode 15, den Vergleich des ersten Prüfmerkmals mit einem von der Kontrolleinrichtung 31 generierten zweiten Prüfmerkmal und den Vergleich der Zeiteinschränkung mit einer Zeitinformation, die von einem der Kontrolleinrichtung 31 zugeordneten Zeitmessinstrument stammt. Stimmt das erste Prüfmerkmal mit dem zweiten Prüfmerkmal überein und liegt der durch die Zeitinformation (vom Zeitmessinstrument) definierte Zeitpunkt oder Zeitintervall innerhalb des von der Zeiteinschränkung (vom Zugangscode) definierten Zeitintervalls, so wird der Zugang zum Objekt ganz oder teilweise freigegeben. Es kann vorgesehen sein, dass der Benutzer 11 während der ihm zugeteilten Zugriffszeit beliebig oft Zutritt zum Objekt erhält, oder dass ein Zugangscode 15 nach einmaliger Verwendung seine Gültigkeit verliert. Nach Ablauf der zugeteilten Zugriffzeit ist keine weitere Authentifizierung unter Verwendung desselben Zugangscodes 15 am Objekt mehr möglich.

### Bezugszeichenliste:

- 11: Benutzer
- 12: Kommunikationsmittel (z.B. Mobiltelefon)
- 13: Authentifizierungs-Code (benutzer- und/oder objektspezifische Information)
- 15: Zugangscode
- 21: Benutzerrechteverwaltung
- 31: Kontrolleinrichtung
- 33: Benutzerschnittstelle (z.B. Tastenfeld)
- 51: Gültigkeitszeitraum
- 52: Zeiteinschränkung (Zeitintervall)
- 52a: Zeiteinschränkung: Anfangszeitpunkt
- 52b: Zeiteinschränkung: Endzeitpunkt
- 61: aktueller Zeitraum
- 62: aktuelle Zeitinformation

## Patentansprüche

1. Verfahren zur Verwaltung von temporären Benutzerrechten für ein Objekt, **dadurch gekennzeichnet dass**:
a) durch eine Benutzerrechteverwaltung (21):
- ein erstes Prüfmerkmal erzeugt wird, indem mindestens eine bei der Benutzerrechteverwaltung (21) hinterlegte Kennung und ein Gültigkeitszeitraum (51) mittels eines ersten Algorithmus transformiert werden,
- ein Zugangscode (15) erzeugt wird, indem dem ersten Prüfmerkmal eine Zeiteinschränkung (52) hinzugefügt wird, und
- der Zugangscode (15) an einen Benutzer (11) übermittelt wird,
b) nach der Übermittlung des Zugangscodes (15) vom Benutzer (11) an eine Kontrolleinrichtung (31), durch die Kontrolleinrichtung (31):
- ein zweites Prüfmerkmal erzeugt wird, indem eine bei der Kontrolleinrichtung (31) hinterlegte identische Kennung und ein aktueller Zeitraum (61), welcher durch ein der Kontrolleinrichtung (31) zugeordnetes Zeitmessinstrument ermittelt wurde, mittels des ersten Algorithmus transformiert werden,
- das erste Prüfmerkmal aus dem Zugangscode (15) isoliert wird und es dann mit dem zweiten Prüfmerkmal verglichen wird,
- die Zeiteinschränkung (52) aus dem Zugangscode (15) isoliert wird und sie dann mit einer Zeitinformation (62), welche durch ein der Kontrolleinrichtung (31) zugeordnetes Zeitmessinstrument ermittelt wurde, verglichen wird und
- abhängig von den Vergleichsergebnissen der Zugang zum Objekt ganz oder teilweise freigegeben wird.

2. Verfahren nach Anspruch 1, **dadurch gekennzeichnet, dass** die Zeiteinschränkung (52) ein kürzeres Zeitintervall repräsentiert als der Gültigkeitszeitraum (51), wobei der Gültigkeitszeitraum (51) vorzugsweise ein Datum ist.

3. Verfahren nach einem der Ansprüche 1 bis 2, **dadurch gekennzeichnet, dass** der erste Algorithmus eine Einwegfunktion enthält, vorzugsweise eine kryptographische Hash-Funktion wie z.B. den Message-Digest-Algorithm 5 (MD5) oder einen Secure-Hash-Algorithm (SHA).

4. Verfahren nach Anspruch 3, **dadurch gekennzeichnet, dass** der erste Algorithmus eine umkehrbare kryptographische Funktion enthält, welche der Einwegfunktion in Bezug auf die Ausführungsreihenfolge vorgeschaltet ist.

5. Verfahren nach einem der Ansprüche 1 bis 4, **dadurch gekennzeichnet, dass** durch die Benutzerrechteverwaltung (21) zur Erzeugung des Zugangscodes (15) das erste Prüfmerkmal und die Zeiteinschränkung (52) mittels eines zweiten Algorithmus transformiert werden.

6. Verfahren nach Anspruch 5, **dadurch gekennzeichnet, dass** der zweite Algorithmus eine umkehrbare kryptographische Funktion ist.

7. Verfahren nach einem der Ansprüche 1 bis 6, **dadurch gekennzeichnet, dass** die Übermittlung des Zugangscodes (15) von der Benutzerrechteverwaltung (21) an den Benutzer (11) mittels eines dem Benutzer (11) zuordenbaren Kommunikationsmittels (12) erfolgt, insbesondere mittels SMS oder E-Mail.

8. Verfahren nach einem der Ansprüche 1 bis 7, **dadurch gekennzeichnet, dass** mindestens eine Kennung vorgesehen ist, wobei
- eine Kennung ein Benutzermerkmal ist, welches einem bestimmten Benutzer (11) oder einer bestimmten Gruppe von Benutzern zugeordnet ist und/ oder
- eine Kennung eine Objektidentifikation ist, welche einem bestimmten Objekt zugeordnet ist, wobei es sich beim Objekt vorzugsweise um ein Gebäude handelt.

9. Verfahren nach einem der Ansprüche 1 bis 8, **dadurch gekennzeichnet, dass** zur Erstellung zusätzlicher Zugangscodes (15) keine Kommunikation zwischen der Benutzerrechteverwaltung (21) und der Kontrolleinrichtung (31) notwendig ist, wobei vorzugsweise keine Kommunikation zwischen der Benutzerrechteverwaltung (21) und der Kontrolleinrichtung (31) möglich ist, und vorzugsweise kein Hinzufügen und kein Ändern von bei der Kontrolleinrichtung (31) hinterlegten Kennungen möglich ist.

10. Zugangskontrollsystem für ein Objekt wie z.B. ein Gebäude beinhaltend:
a) eine vorzugsweise entfernt vom Objekt lokalisierte Benutzerrechteverwaltung (21) mit
- einem Datenspeicher, auf dem mindestens eine Kennung gespeichert ist,
- einem Eingabegerät zur Eingabe oder Auswahl eines Gültigkeitszeitraums (51),
- einer Datenverarbeitungseinheit, die dazu ausgebildet ist, einerseits ein erstes Prüfmerkmal zu erzeugen, indem die Kennung und der Gültigkeitszeitraum (51) mittels eines ersten Algorithmus transformiert werden, und andererseits einen Zugangscode (15) zu erzeugen, indem dem ersten Prüfmerkmal eine Zeiteinschränkung (52) hinzugefügt wird, und
- einer Benutzerschnittstelle zur Übergabe des Zugangscodes (15) an einen Benutzer (11), sowie
b) eine vorzugsweise am Ort des Objekts lokalisierte Kontrolleinrichtung (31) mit
- einem Datenspeicher, auf dem dieselbe Kennung gespeichert ist,
- einer Benutzerschnittstelle (33) zur Übergabe des Zugangscodes (15) vom Benutzer (11) an die Kontrolleinrichtung (31),
- einem Zeitmessinstrument,
- einer Datenverarbeitungseinheit, die dazu ausgebildet ist, ein zweites Prüfmerkmal zu erzeugen, indem die Kennung und ein vom Zeitmessinstrument ausgegebener aktueller Zeitraum (61) mittels des ersten Algorithmus transformiert werden, wobei
- die Datenverarbeitungseinheit der Kontrolleinrichtung (31) dazu ausgebildet ist, das erste Prüfmerkmal und die Zeiteinschränkung (52) aus dem Zugangscode (15) zu isolieren und
einerseits das zweite Prüfmerkmal mit dem ersten Prüfmerkmal zu vergleichen sowie
andererseits die Zeiteinschränkung (52) mit einer Zeitinformation (62), welche durch ein der Kontrolleinrichtung (31) zugeordnetes Zeitmessinstrument ermittelt wurde, zu vergleichen und
abhängig von den Vergleichsergebnissen den Zugang zum Objekt ganz oder teilweise freizugeben.

## Claims

1. Method for the management of temporary user rights for an object, **characterized in that**
a)
- a first inspection characteristic is generated by a user rights management (21), whereby an identification deposited at the user rights management (21) and a validity period (51) are transformed by means of a first algorithm,
- an access code (15) is generated, whereby a time restriction (52) is added to the first inspection characteristic and
- the access code (15) is transmitted to a user (11),
b) after the transmission of the access code (15) by the user (11) to a control device (31)
- a second inspection characteristic is generated by the control device (31), whereby an identical identification deposited at the control device (31) and a current period (61) that has been determined by a time measuring instrument assigned to the control device (31) are transformed by means of the first algorithm,
- the first inspection characteristic is isolated from the access code (15) and is then compared to the second inspection characteristic,
- the time restriction (52) is isolated from the access code (15) and is then compared to a time information (62) that has been determined by a time measuring instrument assigned to the control device (31), and
- the access to the object is totally or partially hallowed depending on the comparison results.

2. Method according to claim 1, **characterized in that** the time restriction (52) represents a shorter time interval than the validity period (51), whereby the validity period (51) is preferably a date.

3. Method according to one of the claims 1 to 2, **characterized in that** the first algorithm contains a one-way function, preferably a cryptographic hash function such as, for examples, the Message-Digest-Algorithm 5 .(mud5.) or a Secure-Hash-Algorithm (SHA).

4. Method according to claim 3, **characterized in that** the first algorithm contains a cryptographic hash function which is upstream to the one-way function in relation to the execution sequence.

5. Method according to one of the claims 1 to 4, **characterized in that** the first inspection characteristic and the time restriction (52) are transformed by means of a second algorithm by the user rights management (21) for generating the access code (15).

6. Method according to claim 5, **characterized in that** the second algorithm is a reversible cryptographic function.

7. Method according to one of the claims 1 to 6, **characterized in that** the transmission of the access code (15) of the user rights management (21) to the user (11) takes place by means of a communication means that can be assigned to the user (11), in particular by SMS or e-mail.

8. Method according to one of the claims 1 to 7, **characterized in that** at least one identification is provided, whereby
- an identification is a user characteristic that is assigned to a certain user (11) or to a certain group of users and/or
- an identification is an object identification that is assigned to a certain object, whereby the matter is for the object preferably of a building.

9. Method according to one of the claims 1 to 8, **characterized in that** no communication is necessary between the user rights management (21) and the control device (31) for generating additional access codes (15), whereby preferably no communication is possible between the user rights management (21) and the control device (31) and preferably no adding and no modification of identifications deposited at the control device (31) is possible.

10. Access control system for an object such as, for example, a building, containing:
a) a user rights management (21) preferably localized at a distance from the object with
- a data memory on which at least one identification is stored,
- an input device for entering or selecting a validity period (51),
- a data processing unit that is configured, on the one hand, to generate a first inspection characteristic whereby the identification and the validity period (51) are transformed by means of a first algorithm and, on the other hand, to generate an access code (15), whereby a time restriction (52) is added to the first inspection characteristic and
- a user interface for the transmission of the access code (15) to a user (11,) as well as
b) a control device (31) preferably localized at the location of the object with
- a data memory on which the same identification is stored,
- a user interface (33) for the transmission of the access code (15) by the user (11) to the control device (31),
- a time measuring instrument,
- a data processing unit that is configured to generate a second inspection characteristic, whereby the identification and a current period (61) output by the time measuring instrument are transformed by means of the first algorithm, whereby
- the data processing unit of the control device (31) is configured to isolate the first inspection characteristic and the time restriction (52) from the access code (15) and,
on the one hand, to compare the second inspection characteristic with the first characteristic as well as,
on the other hand, the time restriction (52) with a time information (62) that has been determined by a time measuring instrument assigned to the control device (31) and to partially or totally allow the access to the object depending on the comparison results.

## Revendications

1. Procédé pour la gestion de droits d'utilisateur temporaires pour un objet, **caractérisé en ce :**
a)
- **qu'**une première caractéristique de contrôle est générée par une gestion des droits d'utilisateur (21), cependant qu'au moins une identification déposée à la gestion des droits d'utilisateur et une période de validité (51) sont transformées au moyen d'un premier algorithme,
- un code d'accès (15) est généré cependant qu'une limitation dans le temps (52) est ajoutée à la première caractéristique de contrôle et
- le code d'accès (15) est transmis à un utilisateur (11),
b) **qu'**après la transmission du code d'accès (15) de l'utilisateur (11) à un dispositif de contrôle (31)
- une seconde caractéristique de contrôle est générée par le dispositif de contrôle (31) cependant qu'une identification identique déposée au dispositif de contrôle (31) et une période de temps actuelle (61) qui est déterminée par un instrument de mesure de temps attribué au dispositif de contrôle: (31) sont transformées au moyen du premier algorithme,
- la première caractéristique de contrôle est isolée du code d'accès (15) et elle est ensuite comparée à la seconde caractéristique de contrôle,
- la limitation dans le temps (52) est isolée du code d'accès (15) et elle est ensuite comparée à une information de temps (62) qui a été déterminée par un instrument de mesure de temps attribué au dispositif de contrôle (31) et
- l'accès à l'objet est totalement ou partiellement autorisé en fonction des résultats des comparaisons.

2. Procédé selon la revendication 1, **caractérisé en ce que** la limitation dans le temps (52) représente un intervalle de temps plus court que la période de validité (51), tua période de validité (51) étant de préférence une date.

3. Procédé selon l'une des revendications 1 à 2, **caractérisé en ce que** le premier algorithme contient une fonction à sens unique, de préférence une fonction de hachage cryptographique comme, par exemple, 1'.algorithme, Message Digest 5 (MD5) ou un algorithme Secure Hash (SHA).

4. Procédé selon la revendication 3, **caractérisé en ce que** le premier algorithme contient une fonction cryptographique réversible qui est située en amont de la fonction à sens unique par rapport à l'ordre d'exécution.

5. Procédé sedan l'une des revendications 1 à 4, **caractérisé en ce que** la première caractéristique et la limitation dans le temps (52) sont transformées par la gestion des droits d'uiiüsafeur (21) pour produire le code d'accès (15) au moyen d'un second algorithme.

6. Procédé selon la revendication 5, **caractérisé en ce que** le second algorithme est une fonction cryptographique réversible.

7. Procédé selon l'une des revendications 1 à 6, **caractérisé en ce que** la transmission du code d'accès (15) de la gestion des droits d'utilisateur (21) à l'utilisateur (11) se fait au moyen d'un moyen de communication (12) qui peut être attribué à l'utilisateur (11), en particulier par SMS ou e-mail.

8. Procédé selon l'une des revendications 1 à 7, **caractérisé en ce qu'**il est prévu au moins une identification,
- cependant qu'une identification est une caractéristique d'utilisateur qui est attribuée à un utilisateur particulier (11) ou à un groupe particulier d'utilisateurs et/ou
- une identification est une identification d'objet qui est attribuée à un objet particulier, cependant qu'il s'agit, pour l'objet, d'un bâtiment.

9. Procédé selon l'une des revendications 1 à 8, caractérisé en ce, pour la génération de codes d'accès supplémentaires (15), aucune communication n'est nécessaire entre la gestion des droits d'utilisateur (21) et le dispositif de contrôle (31), cependant que de préférence aucune communication n'est possible entre la gestion des droits d'utilisateur (21) et le dispositif de contrôle (31) et de préférence aucun ajout et aucune modification d'identifications déposées au dispositif de contrôle (31) n'est possible.

10. Système de contrôle d'accès pour un objet comme, par exemple, un bâtiment, contentant:
a) une gestion des droits d'utilisateur (21) localisée de préférence éloignée de l'objet avec
- une mémoire de données sur laquelle au moins une identification est stockée,
- un dispositif de saisie pour saisir ou sélectionner une période de validité (51),
- une unité de traitement de données qui est configurée pour, d'une part, générer une première caractéristique de contrôle, cependant que l'identification et la période de validité (51) sont transformées au moyen d'un premier algorithme et, d'autre part, pour générer un code d'accès (15), cependant qu'une limitation dans le temps (52) est ajoutée à la première caractéristique de contrôles et
- une interface utilisateur pour la transmission du code d'accès (15) à un utilisateur (11) ainsi
b) qu'un dispositif de contrôle (31) localisé de préférence sur le lieu de l'objet avec
- une mémoire de données sur laquelle la même identification est stockée,
- une interface utilisateur (33) pour la transmission du code d'accès (15) par l'utilisateur (11) au dispositif de contrôle (31),
- un instrument de mesure du temps,
- une unité de traitement de données qui est configurée pour générer une seconde caractéristique de contrôle, cependant que l'identification et une période de temps actuelle (61) qui est sortie par l'instrument de mesure de temps sont transformées au moyen du premier algorithme,
- cependant que l'unité de traitement de données du dispositif de contrôle (31) est configurée pour isoler la première caractéristique de contrôle et la limitation dans le temps (52) du code d'accès (15) et,
d'une part, comparer la seconde caractéristique de contrôle à la première caractéristique de contrôle ainsi que,
d'autre part, comparer la limitation dans le temps (52) à une information de temps (62) qui a été déterminée par un instrument de mesure de temps attribué au dispositif de contrôle (31) et autoriser l'accès à l'objet totalement ou partiellement autorisé en fonction des résultats des comparaisons.
